(19) **Europäisches Patentamt / European Patent Office / Office européen des brevets**

(11) **EP 2 826 889 B1**

(12) **EUROPÄISCHE PATENTSCHRIFT**

(45) Veröffentlichungstag und Bekanntmachung des Hinweises auf die Patenterteilung:
**21.06.2017 Patentblatt 2017/25**

(21) Anmeldenummer: **14176871.3**

(22) Anmeldetag: **14.07.2014**

(51) Int Cl.:
*C25B 15/02* (2006.01)    *C25B 1/46* (2006.01)
*C25B 9/20* (2006.01)    *G01R 31/36* (2006.01)
*H01M 8/04537* (2016.01)    *C25B 15/00* (2006.01)
*C25B 1/14* (2006.01)    *H01M 8/04664* (2016.01)
*H01M 8/04* (2016.01)

(54) **Verfahren und System zur Überwachung der Funktionsfähigkeit von Elektrolysezellen**

Method and system for monitoring the functionality of electrolysis cells

Procédé et système de surveillance du fonctionnement de cellules d'électrolyse

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2013 DE 102013213982**

(43) Veröffentlichungstag der Anmeldung:
**21.01.2015 Patentblatt 2015/04**

(73) Patentinhaber: **Covestro Deutschland AG**
**51373 Leverkusen (DE)**

(72) Erfinder:
• **Verfuß, Florian**
**42119 Wuppertal (DE)**
• **Jörissen, Jakob**
**44227 Dortmund (DE)**

• **Polcyn, Gregor Damian**
**44227 Dortmund (DE)**
• **Toepell, Gabriel**
**44227 Dortmund (DE)**
• **Frania, Philipp**
**44869 Bochum (DE)**

(74) Vertreter: **Levpat**
**c/o Covestro AG**
**Gebäude 4825**
**51365 Leverkusen (DE)**

(56) Entgegenhaltungen:
EP-A1- 2 226 411    EP-B1- 2 006 418
DE-A1- 2 140 830    US-A- 5 015 345
US-A1- 2004 220 752    US-A1- 2006 289 312

**Beschreibung**

Die Erfindung betrifft ein Verfahren zur Überwachung der Funktionsfähigkeit von Elektrolysezellen. Die Erfindung betrifft ferner ein System zur Überwachung der Funktionsfähigkeit von Elektrolysezellen und insbesondere seine Verwendung in der Chloralkali-Elektrolyse.

Die Erfindung geht aus von an sich bekannten Überwachungsverfahren für Elektrolysezellen, die üblicherweise von der Erfassung einer gemittelten Strom-Spannungs-Charakteristik der Zelle Gebrauch machen.

Die Überwachung von Elektrolyseanlagen und die Diagnose von defekten Zellen basieren grundsätzlich auf der Messung prozessrelevanter Parameter wie Temperaturen, Differenzdrücken oder auch Gaskonzentrationen, aber vor allem auf der Messung von Zellspannungen und Zellstrom. Die Zellspannung ist sehr sensitiv gegenüber Änderungen im Elektrolyseur und leicht, auch an den Einzelzellen, erfassbar.

Outotec beschreibt in WO 2005/052700 A1 ein Monitoring-System für eine Kupferelektrolyse.

In einem solchen Überwachungssystem werden die Daten von zumeist mehreren hundert Einzelzellen, verteilt auf mehrere sogenannte Stacks, weiterverarbeitet. Je nach Komplexität des Überwachungssystems besteht es aus einer Vielzahl von untereinander kommunizierenden Modulen, die unterschiedliche Daten(teil-)verarbeitungsschritte übernehmen (vgl. z.B. WO 2007/087728 A1, WO 2001/078164 A3). Verallgemeinert kann man die Aufgaben der hierin offenbarten Module wie folgt beschreiben:

    1. Erfassung und Bündelung der Messwerte

    2. Optische Aufarbeitung der Messwerte für die Anzeige im Leitstand, Anzeige von Alarmen etc.

    3. Speichern und Verwalten der Messdaten in Datenbanken

    4. Aufbereitung (Filtern, Mitteln, Normalisieren usw.) und Analyse der Daten

    5. Diagnose von Fehlern und Anomalien

    6. Meldung von Defekten und Ergreifung von Gegenmaßnahmen

Entscheidende Schritte aller dieser Systeme sind die Datenanalyse und die daran anschließende Diagnose über den Zellzustand.

Einfache Systeme prüfen dabei, ob die gemessenen Einzelzellspannungen innerhalb festgelegter Grenzwertbereiche liegen, zum Beispiel, wie in DE 2652774 C2 beschrieben, ob ein oberer Grenzwert nicht überschritten und ein unterer Grenzwert nicht unterschritten wird. Andernfalls wird eine Warnmeldung im Leitstand angezeigt. In WO 2007/087728 A1 werden lastabhängige Grenzwerte mithilfe von Referenz-i-U-Kurven festgelegt. Für die durch lineare Regression ermittelten Parameter $U_0$ und $k$ der Kennlinie werden obere ($U_{0,\ max}$, $k_{max}$) und untere Grenzwerte ($U_{0,\ min}$, $k_{min}$) bestimmt. Die Grenzwerte für die Zellspannung $U_{min}$ und $U_{max}$ können dann kontinuierlich gemäß:

$$U = k * i + U_0$$

berechnet werden. Auch wird die zeitliche Änderung der Spannung permanent überwacht und mit einem Referenzwert der zulässigen Änderung $k*di/dt$ verglichen.

Beide Systeme analysieren die Messdaten nur hinsichtlich festgelegter Grenzwerte. Zwar können diese auch dynamisch gestaltet und sogar auf Basis historischer Daten und lernfähiger Strukturen optimiert werden, jedoch erlauben sie nicht die qualitative oder quantitative Bestimmung von Fehlern in einzelnen Elektroden.

Aus der EP 00002006418 B1 ist ein System bekannt geworden, welches die Einzelzellspannungen miteinander vergleicht und über zwei Grenzwerte einem Beschädigungsgrad (nicht beschädigt, nicht schwer beschädigt, schwer beschädigt) zuordnet. Auf diese Weise sollen vor allem Defekte (sogenannte Pinholes) an Ionenaustauschermembranen entdeckt werden. Diese sind nur frühzeitig bei der Inbetriebnahme des NaCl-Elektrolyseurs (also bei kleiner Stromdichte) detektierbar, da das Übertreten von NaOH den pH-Wert des Anolyten erhöht und dann die Bildung von Sauerstoff bevorzugt ist. Diese läuft bei einer Zellspannung zwischen 1,2 V und 1,5 V ab und ist damit etwa ein Volt geringer als die Spannung zur Chlorbildung (in Kombination mit Wasserstoff entwickelnden Kathoden). Mit zunehmender Stromdichte löst die Chlorbildung die Sauerstoffbildung ab und die Zellspannung springt auf das Chlorpotential. Steigt die Spannung einer Zelle jedoch nur langsam, kann von einem Defekt ausgegangen werden. Rückschlüsse auf Größe und Position (obere oder untere Hälfte der Zelle) können dann durch Auswertung weiterer Messgrößen wie Differenzdruck oder Füllstand in der Zelle, aber auch durch Anpassen eines Parametermodells an die i-U-Kurven (für kleine Stromdichten, laut Patentabbildung bis ca. 0,5 kA/m$^2$) gezogen werden.

Eine feinere Schadensklassifizierung erlaubt die Methode nach WO 2001/078164 A2. Schwerpunkt ist hier die Extraktion und Identifikation (Pattern Recognition) von Ereignissen innerhalb der kontinuierlich aufgenommenen Eingangsdaten und ihre Verknüpfung mit Diagnosen, welche in einer Datenbank hinterlegt sind. Als Eingangsdaten können gemessene physikalische Größen aber auch, wie in der WO 2001/078164 A2 als bevorzugt dargelegt, bereits aus Messwerten berechnete Größen wie Daten aus Analysen im Zeit- oder Frequenzbereich oder Anpassungsparameter aus der Regression von i-U-Kurven, wie sie nach WO 2006/133562 A1 ermittelt werden, dienen. Die Diagnose läuft dann in zwei Schritten ab:

- In einer Lernphase werden die Eingangsdaten zu einem Ereignis bei einem bestimmten Betriebszustand zusammengefasst und mit einer Diagnose, welche durch einen Experten festgelegt wird, verknüpft und in einer intelligenten Ereignis-Diagnose-Datenbank auf Basis eines neuronalen Netzwerkes abgelegt.

- In der Diagnosephase überprüft dann das System beim jeweiligen Betriebszustand, ob die kontinuierlich eingehenden Daten mit gespeicherten Eingangsdaten hinreichend übereinstimmen. Ist die Ähnlichkeit mit einem bekannten Ereignis groß genug, werden ein Alarm und die entsprechende Diagnose gemeldet. Werden nur unzureichende Übereinstimmungen gefunden, deutet dies auf ein noch nicht bekanntes Ereignis hin, was durch einen Experten mit einer neuen Diagnose verknüpft werden kann.

Eine genaue Beschreibung der oben erwähnten Regression von i-U-Kurven mittels Drei-Parameteranpassung erfolgt im Patent WO 2006/133562 A1. Wie beschrieben, können mittels eines Parametermodells der Form $U = U_0 + S * \log(i) + R * i$ der Verlauf von i-U-Kurven nachgebildet und Informationen sowohl über die Überspannungen als auch der ohmschen Anteile von Elektrolysezellen gewonnen werden. Die entsprechenden Messwerte für die Kennlinien werden während An- und Abfahrprozessen oder bei Laständerung gewonnen. Die Kennlinien müssen dazu zunächst aus den Prozessdaten extrahiert und unter anderem gefiltert, geglättet (Entfernen der Gleichrichterrestwelligkeit) und normalisiert (Ausgleich von Abweichungen in Temperatur und Konzentration) werden. Nach der Parameterbestimmung wird die Güte der Anpassung geprüft. Bei ausreichendem Bestimmtheitsmaß und Vertrauensbereich werden die ermittelten Anpassungsparameter in einer Datenbank hinterlegt und mit Referenzparametern (z.B. aus Zellalterungsmodellen) abgeglichen oder sogenannten vorher festgelegten "operation classes" zugeordnet. Jede "operation class" gilt für einen bestimmten Parameterwertebereich und kennzeichnet einen Zellzustand. Ein ähnliches Parametermodell wird nach der DE 10217694 A1 für die dynamische Bestimmung der i-U-Charakteristik einer Brennstoffzelle mit einem Motor als Verbraucher verwendet. Strom und Spannung werden bei Laständerung kontinuierlich aufgenommen und die Anpassungsparameter bestimmt, welche zur Drehmomentsteuerung und -regelung des Antriebs genutzt werden können.

Ein weiterer Ansatz zur Identifizierung von Anomalien ist die Verwendung von prädiktiven Modellen, mit denen der normale Betriebszustand berechnet wird. Im Gegensatz zu bisher vorgestellten Systemen, bei denen Fehler anhand von wiederkehrenden Kombinationen von Eingangsdaten identifiziert wurden (Pattern Recognition), wird nun die Abweichung der gemessenen Werte vom normalen, berechneten Zustand detektiert und als Anomalie definiert. Vorteil ist die bessere Datenbasis, um den normalen Betriebszustand darzustellen, nachteilig zeigt sich die Schwierigkeit, ein gutes Modell zu entwickeln, welches verschiedene Betriebszustände abbilden kann.

WO 2005/052700 A1 erklärt die Funktionsweise eines on-line Überwachungssystems für eine Kupferelektrolyse. Mithilfe eines prädiktiven Parametermodells, welches im Labor ermittelt wurde, wird abhängig von anderen Betriebsparametern wie Temperatur, Stromdichte oder Konzentration die theoretische Zellspannung berechnet. Die Abweichung zwischen gemessener und theoretischer Zellspannung wird ermittelt und ihr Trend mittels Modell ausgewertet. Mithilfe eines Fuzzy Logik Modells wird dieser Trend in einen status index (Zahl zwischen 0 und 1), der den momentanen Zustand der Zelle kennzeichnet, überführt. Unter Anwendung eines weiteren Fuzzy Logik Modells und Verwendung des status index, alter condition indexes sowie unter Berücksichtigung von Alterungserscheinungen wird dann ein neuer condition index, welcher den Zellzustand über einen längeren Zeitraum charakterisiert, ermittelt.

WO 2007/087729 A1 offenbart ein System bzw. eine Methode, um den Normalbetrieb einer Anlage mittels prädiktiver Modelle nachzubilden und Fehler anhand der Abweichung zwischen gemessenen Prozessparametern und dem modellierten Normalbetrieb zu detektieren.

Im ersten Schritt wird innerhalb einer Lernphase anhand von Referenzdaten und Expertenwissen für jeweils einen Betriebszustand (z.B. In- und Außerbetriebnahme, Lastwechsel) ein Modell aufgestellt und validiert bzw. der Gültigkeitsbereich und die Genauigkeit bestimmt. So können später Abweichungen, die außerhalb der Genauigkeit liegen, als Anomalie identifiziert werden. Mit den Modellparametern können ebenfalls auch schon bekannte durch Fehler auftretende Abweichungen zwischen Modell und Messwerten als sogenannte Signatur oder als Anomalie-Pattern (Sequenz von Signaturen) in einer Datenbank hinterlegt werden.

Im Betrieb werden dann abhängig vom Betriebszustand die mit dem jeweiligen Modell berechneten Prozessgrößen mit den gemessenen verglichen und aus den Abweichungen ihre Signatur berechnet. Sind die Abweichungen der Signatur hinreichend groß, kann von einer Anomalie ausgegangen werden. Stimmt die berechnete Signatur dann mit einer in der Datenbank gespeicherten Signatur überein, ist so die Ermittlung eines Fehlers möglich.

Stand der Technik zu Monitoring- und Diagnosesystemen auf der Basis von Impedanzspektroskopie:

Die Patentanmeldung US 2005/0287402 A1 beschreibt ein System zur Überwachung und Regelung des Wasserhaushalts eines Brennstoffzellenstapels anhand seiner Impedanz.

Der ausdrücklich als Beispiel beschriebene Aufbau umfasst den Brennstoffzellenstapel, einen Wechselrichter, eine Steuereinheit, ein Wasserdosierungssystem und eine Last (Motor).

Prinzipiell liegt durch den Wechselrichter an der Brennstoffzelle eine Spannung mit einer Oberwelle (Restwelligkeit) an, welche am Ausgang der Brennstoffzelle ebenfalls zu einer Restwelligkeit im Strom führt. Durch Vergleich beider Größen wird die Impedanz der Brennstoffzelle bestimmt. Ist der Wert zu hoch, wird den Zellen Wasser zudosiert. Dafür wird repräsentativ nur die Spannung einer Zelle gemessen. Über die Steuerung des Wechselrichters wird typischerweise eine Rechteckoberwelle mit einer Amplitude im mV-Bereich und einer Frequenz von 8 kHz aufgeprägt.

Es können aber auch Oberwellen mit beliebiger Form und beliebigen Amplituden sowie Frequenzen generiert werden. Diese können für weiterreichende Überwachungen (z.B. um auf den Zustand der Zellkomponenten zurückzuschließen), auch in Verbindung mit aufwändigeren Analysemethoden (Fourier-Transformation), genutzt werden.

Anwendbar soll das System auf die Überwachung beliebiger Stromerzeuger, insbesondere aber Brennstoffzellen, sein, die mit einem beliebigen Stromwandler (als Beispiel wird auch ein "AC/DC rectifier" aufgeführt) gekoppelt sind.

In Patent US 2010/0216043 A1 wird ein System erklärt, welches eine Anlage bestehend aus mehreren Brennstoffzellenstacks überwacht und steuert, indem die Elektrochemische Impedanzspektroskopie an einzelnen über die Stacks verteilten Referenzzellen durchgeführt wird. Über spezielle "monitoring circuits" (Wheatstone'sche Brückenschaltung) werden Wechselströme mit verschiedenen Frequenzen aufgegeben und die Spannung der Zellen gemessen. Ein Auswertungssystem generiert aus diesen Daten die entsprechenden Impedanzverläufe (Bode- und Nyquistplot) und bestimmt Polarisations- und ohmsche Widerstande. Die dabei erhaltenen Charakteristiken werden auf die übrigen Zellen "extrapoliert" und zur Regelung verschiedenster Betriebsparameter (z.B. Gasvolumenströme, Feuchtigkeit) genutzt, um die Brennstoffzellen möglichst optimal zu betreiben.

Die Patentanmeldung US 2004/0220752 A1 beschreibt im Wesentlichen die Anwendung der im Labor etablierten Elektrochemischen Impedanzspektroskopie (EIS) an Brennstoffzellen im Betrieb als Echtzeit-Überwachung und -Regelung verschiedener Brennstoffzellenparameter (z.B. Temperatur, Durchflussraten). Die dort beschriebene Einrichtung zur Messung von Gleich- und Wechselströmen bzw. Gleich- und Wechselspannungen entspricht dem typischen Messaufbau einer EIS. Dies gilt auch für die dort beschriebene Daten-Verarbeitung und -Auswertung: Wie bei der EIS werden Informationen über den Zellwiderstand aus Phasenverschiebung und Amplitude mithilfe der komplexen Wellenfunktion der Wechselstrom- und Wechselspannungs-Signale gewonnen. Das dafür benötigte klar definierte und einfrequente Wechselstrom-Signal wird, wie für eine EIS typisch, extern mithilfe eines Signalgenerators erzeugt und der störungsfreien, "glatten" Gleichstromlast überlagert.

Ein verlässliches Verfahren zur Identifizierung fehlerhafter einzelner Elektrolysezellen aus einer Vielzahl von Elektrolysezellen eines Elektrolyseurs ist bislang nicht bekannt geworden. Die Aufgabe der vorliegenden Erfindung ausgehend vom oben beschriebenen Stand der Technik besteht darin, ein verbessertes Überwachungsverfahren für Elektrolysezellen, insbesondere für den Einsatz in der Chloralkali-Elektrolyse, bereitzustellen, das die vorstehenden Nachteile überwindet und eine sichere Identifizierung von defekten oder in ihrer Funktion beeinträchtigten Elektrolysezellen aus einer Vielzahl von Elektrolysezellen eines Elektrolyseurs, insbesondere bei der Chloralkali-Elektrolyse ermöglicht.

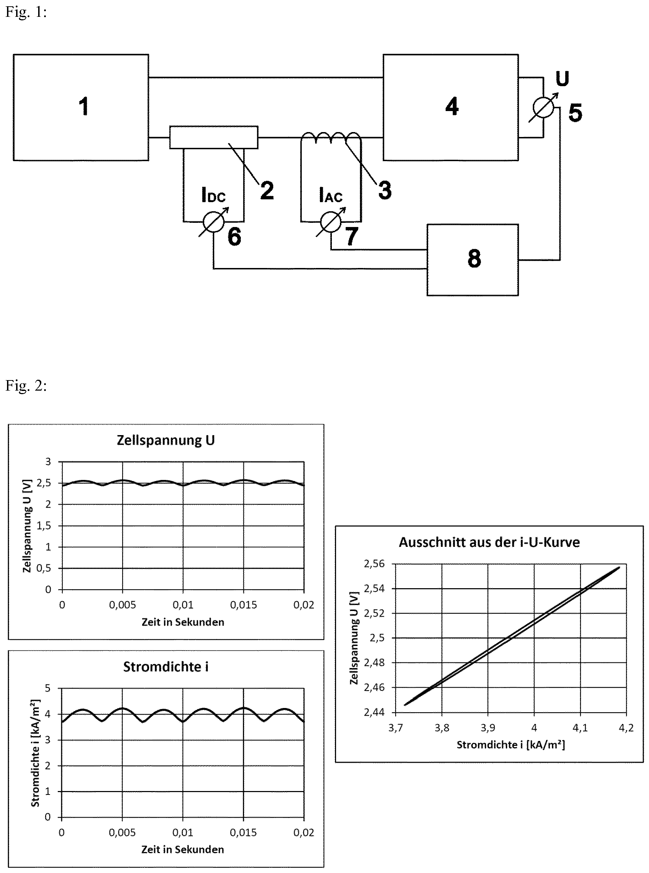

Gegenstand der Erfindung ist ein Verfahren zur Überwachung der Funktionsfähigkeit von Elektrolysezellen einer Elektrolyseanlage, insbesondere einer Membranelektrolyseanlage, bevorzugt von mehreren gleichzeitig in Produktion betriebenen Elektrolysezellen, dadurch gekennzeichnet, dass die Strom/Spannungskurve einer der Elektrolysespannung überlagerten Wechselspannung gemessen und mit den vorgegebenen Kennwerten einer funktionstüchtigen Elektrolysezelle verglichen wird und der Vergleichswert erfasst wird (siehe Fig. 1 und 2) und dass als Wechselspannung die Oberwellenwechselspannung der Gleichrichter für die Erzeugung der Elektrolysespannung verwendet wird.

Vorteil und Neuerung dieses Überwachungssystems gegenüber bestehenden und kommerziell verfügbaren Systemen ist der Gewinn an zusätzlichen Informationen über das elektrochemische Verhalten durch Messung von Strom- und Spannungszeitverläufen mit höherer Auflösung als üblich, um damit die Oberwellen in Strom und Spannung für die Diagnose des Zellzustandes zu nutzen. Diese Informationen stehen bei herkömmlichen Systemen nicht zur Verfügung, da ihre Messwerterfassung mit üblichen Abtastraten (maximal 100 Hz) die Oberwellen mit Grundfrequenzen von typischerweise 300 Hz oder 600 Hz (je nach Gleichrichterbauform 6 oder 12 Pulse) nicht ausreichend auflösen können. Hinzu kommt bei herkömmlichen Systemen das Bestreben, mit integrierenden Elementen und Filtern möglichst störungsarme und oberwellenfreie Strom- und Spannungssignale zu erhalten. Diese sind notwendig für die Auswertung stationärer Strom-Spannungs-Charakteristiken (i-U-Kurven), auf denen derzeit alle bekannten Elektrolyse-Überwachungssysteme basieren. Zugänglich sind diese Charakteristiken aber nur während der In- oder Außerbetriebnahme und bei Laständerungen, also bei einer Störung des laufenden Betriebes.

Bei konstantem, stationärem Betrieb können diese Systeme nur auf gemittelte Werte für Strom und Spannung zurückgreifen. Damit ist es möglich, die Änderung der Zellspannung über eine längere Betriebszeit (Abdriften der Zellspannung) zu registrieren und eventuell durch Einbeziehen von Daten anderer Sensoren oder chemischer Analysen Fehler zu diagnostizieren. Allerdings besteht kein Zugriff auf eine aktuelle Strom-Spannungs-Charakteristik, die besonders sensitiv auf Schäden reagiert und sogar die Zuordnung von Schäden zu einzelnen Zellkomponenten (z.B. ein Pinhole in der Membran) ermöglicht.

Die Messeinheit (8 in Fig. 1) muss eine ausreichende Auflösung sowohl für die Höhe des elektrischen Signals als auch für die Zeit aufweisen (für z.B. 100 Messpunkte je Halbwelle einer 600 Hz Oberwelle aus einem 12-Puls-Gleichrichter ergibt sich eine Abtastrate von 120 kHz; die Messungen bei der Entwicklung des Verfahrens erfolgten mit einer Messkarte mit 2 MHz Abtastrate und 14 Bit Auflösung).

Der Zeitverlauf des Stroms I (6 und 7) muss immer gleichzeitig mit der Spannungsmessung U (5) in der gleichen Auflösung erfasst werden. Das Signal aus dem im Normalfall in einer Elektrolyseanlage eingebauten Shuntwiderstand 2 (z.B. Spannungsabfall im Bereich von 50 mV bei Strömen von ca. 15.000 A) gibt den Mittelwert der Stromstärke $I_{DC}$ mit integrierenden Messinstrumenten sehr genau an. Für das neue Überwachungssystem, das eine exakte Aufnahme der Stromoberwellen erfordert (bei 15.000 A nur einige 100 A Amplitude der Restwelligkeit, siehe Fig. 2), ist das Signal aus einem Shuntwiderstand 2 allein wegen zu großer überlagerter Störungen aber ungeeignet. Hier wird ein hinreichend empfindliches Strommessgerät benötigt, das auch den Wechselstromanteil $I_{AC}$ im durch den Gleichrichter 1 erzeugten Frequenzbereich mit geringen Phasen- und Amplitudenfehlern aufnimmt. Vorzugsweise basiert es auf der Induktion durch das Magnetfeld des Stroms, wie z.B. eine Rogowski-Spule 3 mit einem entsprechenden Verstärker. Diese erfasst nur den Wechselstromanteil (AC-Anteil $I_{AC}$) des Stroms. Man kann dann den Gesamtstrom einschließlich der Restwelligkeit ermitteln durch Addition des AC-Anteils $I_{AC}$ zum Gleichstromanteil (DC-Anteil $I_{DC}$), der im Allgemeinen aus der Messung an einem Shuntwiderstand 2 im Leitstand zugänglich ist.

Um kurze Signalwege zu gewährleisten, sollten die Zellspannungen U möglichst dicht am Elektrolyseur 4 erfasst (5) und von dort aus in digitaler Form zum Leitstand übertragen werden. Denkbar ist der Einsatz mehrerer Messeinheiten (z.B. pro Einzelzelle), oder einer Messeinheit, die per Multiplexer die Messwerte nacheinander abfragt. Dabei sind bezüglich der Messtechnik und der Sicherheitsvorschriften die zulässigen Spannungswerte innerhalb des bipolar geschalteten Elektrolyseurs und die Potenzialdifferenz gegen Erde zu berücksichtigen (z.B. durch potenzialgetrennte Datenübertragung). Spannung U (5) und Strom I (6 und 7) der Zellen müssen synchron erfasst werden, wobei die Strommesseinrichtung nur einmal in einem Stromkreis aus Gleichrichter 1 und Elektrolyseur 4 erforderlich ist.

Um die Datenauswertung des erfindungsgemäßen Überwachungssystems zu verdeutlichen, soll sie dem klassischen Weg zur Analyse dynamischer Strom-Spannungs-Charakteristiken, der im Labormaßstab bewährten elektrochemischen Impedanz-Spektroskopie (EIS) gegenübergestellt werden. Dabei verwendet man besonders störungsarme Anregungssignale, typischerweise rein sinusförmige Oberwellen unterschiedlicher Frequenzen mit Amplituden im Millivolt-Bereich, die einem sauberen Gleichstrom überlagert werden.

Das neue Überwachungssystem für großtechnische Elektrolyseure setzt nicht ein beeinflussbares Anregungssignal ein, sondern es nutzt die vorhandene Restwelligkeit des Gleichrichters 1, die prinzipbedingt keine einfache, genau definierte Schwingungsform aufweist. Aufgrund der Überlagerung der drei sinusförmigen Phasen des Drehstroms und durch die Leistungssteuerung im Gleichrichter durch Phasenanschnitt mittels Thyristoren, besteht die Restwelligkeit, je nach Gleichrichterbauart (6-pulsig oder 12-pulsig), aus einem Frequenzspektrum mit einer Grundfrequenz von 300 Hz oder 600 Hz und den Vielfachen dieser Grundfrequenzen. Dabei ist die Amplitude variabel und hängt vom Gleichrichterbetriebspunkt ab (d.h. vom Bruchteil der Volllastleistung). Liegt dieser nicht im optimalen Bereich, z.B. beim Einstellen kleiner Leistungen durch Phasenanschnitt aus einem großen Gleichrichter, kann die Restwelligkeit die üblichen 5% stark übersteigen.

Hinzu kommt eine Reihe von Störungen, die die Restwelligkeit zusätzlich überlagern können. Diese können zum einen selbst aus dem Gleichrichter 1 stammen, z.B. als Regelungsartefakt der Thyristorsteuerung, oder durch Wechselwirkung mit der Umgebung entstehen, z.B. durch Induktion aus starken Magnetfeldern. Auch variieren die einzelnen Pulse aufgrund von kleineren Unterschieden in den Thyristoren.

Dies macht es erforderlich, die Informationen von den Störanteilen zunächst zu trennen und für die Auswertung aufzubereiten. Diese Aufbereitungseinheit kann dabei grundsätzlich als Hard- oder Softwarelösung ausgeführt werden. Denkbar sind hierbei unter anderem (Bandpass-)Filter, mit denen sich die Strom- und Spannungsanteile bei der Gleichrichtergrundfrequenz zur Analyse isolieren lassen. Während der für diese Erfindung durchgeführten Messungen im Labor und auch an einem Technikumselektrolyseur kam ein dafür ausgearbeiteter Mittelungsalgorithmus zum Einsatz. Dieser erkennt automatisch die Grenzen der einzelnen Pulse in einem Strom- bzw. Spannungszeitverlauf, schneidet die Pulse auseinander, legt sie übereinander und bildet die Mittelwerte aus den jeweils übereinanderliegenden Datenpunkten aller Pulse.

Dabei zeigte sich überraschend, dass trotz der starken Störungen durch überlagerte Schwingungen am Technikumselektrolyseur die Ergebnisse für eine 50 Hz Netzfrequenzperiode sehr gut reproduzierbar waren, die einzelnen Pulse und die einzelnen Elektrolysezellen jedoch deutliche Unterschiede aufweisen konnten.

Die Auswertungseinheit 8 stellt letztendlich den Zusammenhang zwischen den Strom- und Spannungsoberwellen und dem Zustand der Elektrolysezelle her. Grundlage dieser Auswertung bilden das Verhältnis zwischen den Strom- und Spannungsoberwellenamplituden sowie die Phasenverschiebung zwischen beiden Oberwellen.

Die einfachste und effektivste Möglichkeit, diese zu analysieren, bietet die Auftragung als dynamische i-U-Kurve für den erfassten kleinen Stromdichtebereich, wie sie in Fig. 2 dargestellt ist (der Strom I wird dafür in die Stromdichte i umgerechnet, also auf die aktive Fläche der Elektrolysezelle bezogen). Der Kurvenverlauf enthält dann als zellrelevante Informationen:

- den Mittelwert der Zellspannung, wie er auch in den herkömmlichen Systemen erfasst wird,

- die Steigung, die ähnlich dem k-Faktor bei stationären i-U-Kurven genutzt werden kann,

- eine Hysterese, die in Zellen mit Wasserstoff entwickelnden Kathoden nur sehr klein aber doch signifikant erkennbar ist, während sie sich in Zellen mit Sauerstoffverzehr-Kathoden (SVK) durch die hohen Kapazitäten in diesen Gasdiffusionselektroden stark auswirkt.

Da nicht alle Komponenten eines Elektrolyseurs (Anode, Kathode, Membran) diese Größen in gleicher Weise beeinflussen, erlaubt die Auswertung - insbesondere auch von zeitlichen Änderungen sowie von Unterschieden gegenüber dem Standardzustand - eine Aussage über den Zustand der Komponenten bzw. eine Diagnose von schadhaften Komponenten. Ein erster Auswertungsschritt ist die Abschätzung einer vollständigen i-U-Kurve für den ganzen Stromdichtebereich aus den für den kleinen Stromdichtebereich erhaltenen Daten. Daraus lassen sich unterscheiden:

- Änderungen im ohm'schen Widerstand der Zelle, z.B. Erhöhung des Membran-Spannungsabfalls durch Verunreinigungen oder Veränderungen in den Übergangswiderständen bei der Kontaktierung einer SVK, die sich hauptsächlich auf die Steigung der Kurve auswirken,

- Veränderungen in der thermodynamischen Potenzialdifferenz der elektrochemischen Reaktion, wie sie z.B. durch Vermischung von Anolyt und Katholyt beim Auftreten eines Pinholes (Durchbruch) in der Membran entsteht, was sich hauptsächlich im extrapolierten Achsenabschnitt der Kurve für die Stromdichte Null zeigt,

- Einen Schaden an einer SVK, z.B. Verminderung der effektiv wirksamen SVK-Fläche durch mangelhaften Sauerstoffzutritt infolge einer partiellen Bedeckung der SVK-Gasseite mit Natronlauge, was hauptsächlich an Veränderungen der Hysterese erkennbar wird.

Diese Informationen erlauben es z.B., einen gezielten Alarm auszulösen, um kostspielige Folgeschäden rechtzeitig zu vermeiden.

Das neue Überwachungssystem kann darüber hinaus für feinere Analysen auch weitere im Prinzip aus der Literatur bekannte Auswertungsmethoden einbeziehen. So lassen sich die in den Messergebnissen enthaltenen Informationen, die über die in den bestehenden und kommerziell verfügbaren Systemen erfassten Daten hinaus gehen, optimal ausnutzen:

- Einsatz von Modellen, deren Parameter mittels Regressionsrechnung an die gemessenen Daten angepasst werden. Bekannt sind zum Beispiel elektrotechnische Ersatzschaltbilder wie sie in der elektrochemischen Impedanz-Spektroskopie (EIS) genutzt werden, um Werte für Reaktionswiderstände, ohmsche Widerstände oder Doppelschichtkapazitäten zu ermitteln. Denkbar ist aber auch die Verwendung instationärer Reaktionsmodelle, die neben der elektrochemischen Reaktion auch Stofftransportphänomene berücksichtigen.

- Eine andere Analysemöglichkeit besteht darin, die Zeitverläufe von Strom- und Spannungsoberwellen zunächst in den Frequenzbereich, beispielsweise durch Fourier-Transformation, zu überführen und anhand des Impedanzverlaufs, des Bodeplots oder des Nyquistplots auszuwerten, wie es üblich in der Impedanz-Spektroskopie ist. Die Berechnung von Modellparametern erfolgt dabei zumeist auf Basis von elektrotechnischen Ersatzschaltbildern.

- Wie in WO 2001/078164 A3 und WO 2006/133562 A1 bereits beschrieben, könnten dann die im Zeit- oder Frequenzbereich ermittelten Parameter zur Klassifizierung von Ereignissen bzw. Anomalien herangezogen werden, indem die erhaltene Parameterkombination mit Kombinationen von Parametern, welche mit einer Diagnose oder einem Schaden verknüpft und in Datenbanken hinterlegt sind, verglichen werden (Pattern Recognition).

Aus dem zuvor Beschriebenen ergeben sich die nachfolgenden bevorzugten Ausführungsformen der Erfindung.

Bevorzugt wird das neue Verfahren in einem Elektrolyseur durchgeführt, bei dem die Elektrolysezellen mit bipolarer Verschaltung der Elektrolysezellen vorliegen.

In einem bevorzugten Verfahren wird als Wechselspannung die Oberwellenwechselspannung der Gleichrichter für die Erzeugung der Elektrolysespannung aus einer Netzwechselspannung, verwendet.

In einem besonders bevorzugten Verfahren werden die eventuellen Störanteile im Wechselspannungssignal und/oder Wechselstromsignal (z.B. Messrauschen) vor oder nach der Erfassung des Signals herausgefiltert.

Vorteilhaft ist weiterhin eine bevorzugte Form des neuen Verfahrens bei der die Wechselstrom/Wechselspannungsanteile mit einer Abtastrate von mindestens 10 kHz, bevorzugt von mindestens 100 kHz gemessen werden.

In einer besonders bevorzugten Ausführung des neuen Verfahrens erfolgt die Messung des Wechselstromanteils an der Stromzuführung zu der zu messenden Elektrolysezelle induktiv, insbesondere unter Verwendung einer Rogowski-Spule.

Zur Identifizierung von elektrischen Kontaktierungsfehlern und/oder Membranschäden wird in einer bevorzugten Ausführung des Verfahrens als Kennwert für die Funktionstüchtigkeit der einzelnen Elektrolysezellen die Steigung in einer abgeleiteten Stromdichte-Spannungs-Kennlinie verwendet (i-U-Kurve).

Zur Identifizierung von Lecks in der Ionenaustauschermembran bei Membranelektrolyseuren oder von Elektrodenfehlern wird in einer anderen bevorzugten Ausführung des Verfahrens als Kennwert für die Funktionstüchtigkeit der einzelnen Elektrolysezellen in einer abgeleiteten Stromdichte-Spannungs-Kennlinie der extrapolierte Achsenabschnitt der Kennlinie für die Stromdichte Null verwendet.

Weiterhin kann insbesondere als Kennwert für die Funktionstüchtigkeit der einzelnen Elektrolysezellen in einer abgeleiteten Stromdichte-Spannungs-Kennlinie die Veränderung der Hysterese der Kennlinie verwendet werden.

Vorteilhaft ist es auch, das Verfahren mit an sich bekannten Verfahren der Überwachung der Einzelzellspannung der Elektrolysezellen zu kombinieren. Die durch das neue Verfahren ermittelten Kennwerte können z.B. mit den oben vorgestellten Analysemethoden (lernfähige Struktur, prediktives Modell) zur ereignisabhängigen Steuerungen von Elektrolyseanlagen weiter genutzt werden.

In einer besonders vorteilhaften Ausbildung des neuen Verfahrens wird bei Überschreiten einer vorgegebenen Anzahl von in ihrer Funktionsfähigkeit beeinträchtigten Elektrolysezellen aufgrund der Messwerterfassung ein Warnsignal erzeugt, das zur Information des Bedienpersonals oder zur automatischen Außerbetriebnahme der einzelnen Elektrolysezellen oder des gesamten Elektrolyseurs verwendet wird.

Das neue Verfahren findet insbesondere Anwendung in Elektrolyseanlagen zur Elektrolyse von Alkalichloridlösungen, insbesondere von Lithium-, von Natrium-, oder von Kaliumchloridlösungen, bevorzugt von Natriumchloridlösungen oder von Salzsäure. Auf diese Elektrolyseverfahren ist das neue Verfahren jedoch nicht grundsätzlich beschränkt. Denkbar ist auch die Anwendung bei der Wasserelektrolyse.

Weiterer Gegenstand der Erfindung ist noch ein System zur Überwachung der Funktionsfähigkeit von Elektrolysezellen einer Elektrolyseanlage mit mehreren Elektrolysezellen, insbesondere einer Membranelektrolyseanlage, bevorzugt mit mehreren gleichzeitig in Produktion betriebenen Elektrolysezellen, mindestens umfassend einen Spannungserzeuger zur Erzeugung einer der Elektrolysegleichspannung überlagerten Wechselspannung, eine Spannungsmesseinrichtung geschaltet zur Messung des Gleichspannungsanteils und des Wechselspannungsanteils über den einzelnen Elektrolysezellen, mindestens eine Strommesseinrichtung zur Messung des Gleichstromanteils und des Wechselstromanteils des elektrischen Stroms, der den Elektrolysezellen zufließt und eine Datenverarbeitungseinheit, die einen Aufnehmer für die Messwerte der Gleichspannungsanteile, der Wechselspannungsanteile, des Gleichstromanteils und des Wechselstromanteils, einen Erzeuger für eine Strom/Spannungskurve und einen Vergleicher für den Vergleich derStrom/Spannungskurve der einzelnen Elektrolysezellen mit den vorgegebenen Kennwerten einer funktionstüchtigen Elektrolysezelle umfasst, und dass der Wechselspannungserzeuger durch einen Gleichrichter für die Erzeugung der Elektrolysespannung aus Wechselspannung gebildet ist, der im Betrieb eine Oberwellenwechselspannung aufweist.. Bevorzugt ist ein Überwachungssystem, das Strom- und Spannungsmesseinrichtungen für Elektrolysezellen in einem Elektrolyseur mit bipolarer Verschaltung der Elektrolysezellen aufweist.

Besonders bevorzugt ist ein neues Überwachungssystem, dass elektronische Filter für eventuelle Störanteile im Wechselspannungssignal vor der Erfassungseinheit der Datenverarbeitungseinheit umfasst.

Die Strommesseinrichtung des Überwachungssystems enthält außer der üblichen Gleichstrommessung mit Hilfe eines Shunt-Widerstandes wie oben beschrieben insbesondere eine induktive Wechselstrommesseinrichtung und umfasst insbesondere eine Rogowski-Spule als Messwertaufnehmer.

In einer besonders bevorzugten Ausführung des Überwachungssystems weist die Datenverarbeitungseinheit eine Ausgabeeinheit mit Signalerzeuger auf.

In einer besonders bevorzugten Variante des Überwachungssystems ist der Signalerzeuger mit einer optischen und/oder mit einer akustischen Warnvorrichtung und/oder mit einer Anlagensteuerung für den Betrieb der einzelnen Elektrolysezellen oder für den Betrieb ausgewählter Zellenstapel oder für den Betrieb des gesamten Elektrolyseurs elektrisch verbunden.

Wie beschrieben wird das System besonders bevorzugt mit einer Elektrolyseanlage zur Elektrolyse von Alkalichloridlösungen, insbesondere von Lithium-, Natrium-, oder Kaliumchloridlösungen, bevorzugt von Natriumchloridlösungen oder Salzsäure verbunden.

Die Erfindung wird nachfolgend anhand der Figur durch die Beispiele, welche jedoch keine Beschränkung der Erfindung darstellen, näher erläutert.

Es zeigen:

Fig. 1 ein Schema des erfindungsgemäßen Überwachungssystems

In Fig. 1 haben die Bezugszeichen die nachstehende Bedeutung:

1 Transformator und Gleichrichter für Elektrolysespannung

2 Shuntwiderstand

3 Rogowski-Spule

4 Elektrolysezelle

5 Messung der Zellspannung U (Wechselspannungsmessung)

6 Messung des Gleichstromanteils $I_{DC}$ im Zellstrom I

7 Messung des Wechselstromanteils $I_{AC}$ im Zellstrom I

8 Messwerterfassung

Fig. 2 ein Beispiel für die zeitlich erfasste Zellspannung U und Stromdichte i und den daraus erzeugten Ausschnitt aus der Stromdichte-Spannungs-Kennlinie (i-U-Kurve)

Fig. 3 Vergleich der i-U-Kurven vor und bei Membranschädigung durch Calciumzugabe

Fig.4 zeitlicher Verlauf der Membranschädigung durch Calciumzugabe: Anstieg der Zellspannung nur durch den stromabhängigen Anteil der i-U-Kurve (= Steigung b mal mittlere Stromdichte, resultierend aus dem ohm'schen Widerstand), während der Achsenabschnitt (d.h. die elektrochemische Reaktion) nahezu konstant bleibt

Fig. 5 zeitlicher Verlauf der Membranschädigung durch ein Pinhole: Einbruch der Zellspannung weitaus überwiegend durch den Achsenabschnitt der i-U-Kurve (Änderung der elektrochemischen Reaktion) aber kaum durch ihren stromabhängigen Anteil (die Steigung b, d.h. der ohm'sche Widerstand, bleibt weitgehend konstant)

**Beispiele**

Die Beispiele beschreiben das neue Verfahren zur Überwachung von technischen Elektrolyseeinzelzellen für zwei experimentell simulierte Störfälle im Detail.

Hierbei wird zur Überwachung die dynamische Strom-Spannungs-Charakteristik der Einzelzellen analysiert. Sie resultiert aus der Reaktion der Zelle 4 auf das periodische Wechselstromsignal, das als Oberwelle des Gleichstroms infolge der Restwelligkeit des Gleichrichters 1 in vielen technischen Elektrolyseanlagen vorhanden ist.

Figur 1 zeigt den prinzipiellen Messaufbau. Durch die Restwelligkeit ist der Strom I, mit dem die Elektrolysezelle 4 vom Gleichrichter 1 versorgt wird, nicht konstant sondern schwingt periodisch um einen kleinen Betrag. Diese minimale Stromänderung wirkt sich auch auf die Elektrolysezelle 4 aus, welche mit periodischen Änderungen der Zellspannung U reagiert. Die Idee des Messkonzeptes besteht nun darin, dass man den zeitlichen Verlauf sowohl des Stroms als auch der Zellspannung erfasst, und durch Vergleich bzw. Gegenüberstellung der periodischen Änderungen beider Größen Rückschlüsse auf den Zustand der Zelle und ihrer Komponenten ziehen kann (siehe Fig. 2).

Als Beispiele wurden Membranschäden experimentell simuliert: Ziel der Versuche war die Erfassung der Störung der Funktionsfähigkeit einer Chloralkali-Elektrolysezelle durch das erfindungsgemäße Überwachngsverfahren nach einer gezielten Schädigung der Membran:

a) durch Calciumkontamination

b) durch Perforation (Pinhole).

Durch Anwendung des neuen Systems sollten die Schäden nicht nur generell erkannt sondern auch identifiziert bzw. voneinander unterschieden werden.

Dazu wurde eine Chloralkali-Laborzelle (Anode: Streckmetall-Dimensions-Stabile-Anode (DSA), Kathode: Sauerstoff-Verzehr-Kathode (SVK), Membran: Flemion F 8020 Sp, finite gap Anordnung) mit einer Membranfläche von 21 $cm^2$ kontinuierlich unter typischen technischen Bedingungen ($T_{Katholyt}$ = $T_{Anolyt}$ = 80 °C, $w_{NaCl}$ = 19 Gew.%, $w_{NaOH}$= 32 Gew.%, leichter Laugeüberdruck) bei einer mittleren Stromdichte von 4 kA/$m^2$ betrieben. Als Stromversorgung diente ein 6-Puls-Laborgleichrichter, der im Aufbau einem industriell verwendeten Gleichrichter entspricht.

Die Membranschädigungen wurden wie folgt durchgeführt:

a) Membrankontamination:

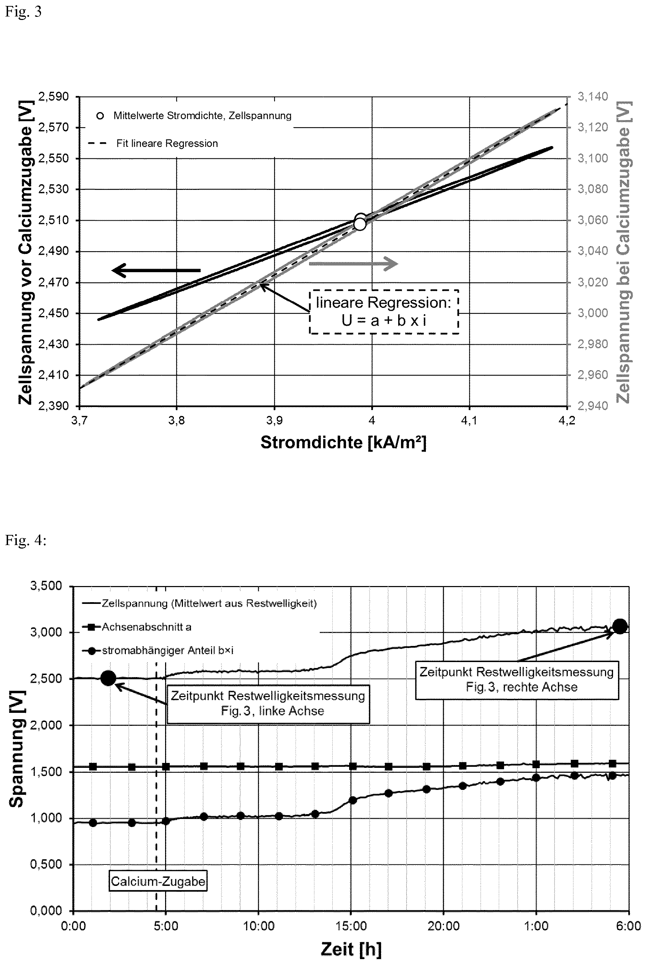

Nach Erreichen des stationären Zustands erfolgte die Dosierung einer Calcium-haltigen Sole ($w_{NaCl}$ = 19 Gew.%, $w_{Ca2+}$ = 2,5 Gew.%) direkt in den Anodenraum mittels einer Spritzenpumpe (Förderrate: 0,5 ml/h) über die gesamte weitere Versuchszeit, so dass sich im Anodenraum eine Calcium-Konzentration von $w_{Ca2+}$ = 240 ppm (Gewichtsanteil) einstellte (Beginn des Versuchs in Fig. 4 gekennzeichnet).

b) Membranperforation (Pinhole):

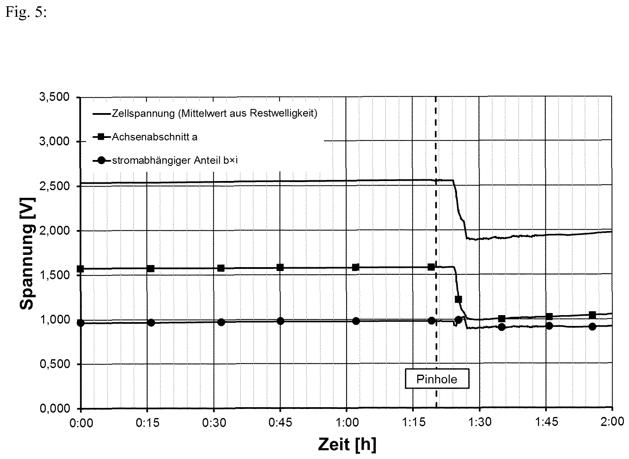

Nach Erreichen des stationären Zustands wurde die Membran mit einem Titandraht durchstoßen und ein etwa 0,5 mm großes Loch (Pinhole) erzeugt (Beginn des Versuchs in Fig. 5 gekennzeichnet). Der Draht war vor Inbetriebnahme der Zelle zusammen mit einer Durchführung in die Rückseite der Anodenkammer eingebaut worden. Für den Versuch konnte er von außen ohne das DSA-Gitter zu berühren bis an die Membran herangefahren werden.

Während des gesamten Betriebes wurden Restwelligkeitsmessungen in Abständen von 15 Minuten (während der Experimente sogar mit bedeutend kürzeren Abständen von bis zu 10 Sekunden) durchgeführt, indem die restwellige Zellspannung U und der restwellige Zellstrom I (Spannungsabfall an einem Shunt) bei Abtastraten von 500 kHz über eine Messkarte verbunden mit einem Computer erfasst wurden. Durch Auftragung der gemessenen Zellspannung U gegen die Zellstromdichte i erhält man gemäß Fig. 2 die Restwelligkeits-i-U-Kurven, welche mittels linearer Regression ausgewertet wurden. In Fig. 3 sind exemplarisch zwei Restwelligkeits-i-U-Kurven vor und bei Calciumkontamination abgebildet (die Messzeitpunkte sind in Fig. 4 eingetragen). Die gestrichelte Grade zeigt die lineare Regression der Kurve. Die Kreise entsprechen den Mittelwerten der restwelligen Zellspannung und der restwelligen Stromdichte.

Die zeitlichen Verläufe der mittleren Zellspannung sowie des Achsenabschnittes und des stromabhängigen Anteils (Steigung b multipliziert mit mittlerer Stromdichte, hier: 4 kA/m$^2$), ermittelt aus der linearen Regression, sind für die Membrankontamination in Fig. 4 und für die Membranperforation in Fig. 5 dargestellt.

Stand der Technik ist bisher die Verfolgung der zeitlichen Änderung der Zellspannung, welche zwar auf einen Störfall hinweist, aber keine weitere Diagnose erlaubt. Das neue System stellt zusätzliche Informationen zur Diagnose in Form der zeitlichen Änderung des Achsenabschnittes und des stromanhängen Anteils der Restwelligkeits-i-U-Kurven zur Verfügung. Die Auswertungen ergeben folgendes:

a) Membrankontamination (Fig. 4):

Kurz nach Beginn der Calcium-Zugabe erhöht sich die Zellspannung kontinuierlich. Es ist bekannt, dass Calcium in der Membran schwerlösliche Niederschläge bildet und somit den Natriumionen-Transport behindert, so dass der Membranwiderstand steigt. In Folge dessen nimmt der stromabhängige Anteil simultan mit der mittleren Zellspannung zu, während der Achsenabschnitt konstant bleibt.

b) Membranperforation (Fig. 5):

Durch das Pinhole tritt Lauge in den Anodenraum über, erhöht den pH-Wert, wodurch die anodische Sauerstoffbildung bevorzugt wird und die Chlorproduktion zum Erliegen kommt, also eine starke Änderung der elektrochemischen Reaktionen eintritt. Da die Sauerstoffbildung bei niedrigerem Gleichgewichtspotential stattfindet, sinkt die Zellspannung, ebenso wie der Achsenabschnitt, sprunghaft ab. Der stromabhängige Anteil bleibt nahezu unverändert.

Mit dem erfindungsgemäßen System können also verschiedene Membranschäden durch das unterschiedliche Verhalten von Achsenabschnitt und stromabhängigem Anteil identifiziert werden.

**Patentansprüche**

1. Verfahren zur Überwachung der Funktionsfähigkeit von Elektrolysezellen einer Elektrolyseanlage, insbesondere einer Membranelektrolyseanlage, bevorzugt von mehreren gleichzeitig in Produktion betriebenen Elektrolysezellen, **dadurch gekennzeichnet, dass** die Strom/Spannungskurve einer der Elektrolysespannung überlagerten Wechselspannung gemessen und mit den vorgegebenen Kennwerten einer funktionstüchtigen Elektrolysezelle verglichen wird und der Vergleichswert erfasst wird und dass als Wechselspannung die Oberwellenwechselspannung der Gleichrichter für die Erzeugung der Elektrolysespannung verwendet wird.

2. Verfahren nach Anspruch 1, **dadurch gekennzeichnet, dass** die Elektrolysezellen in einem Elektrolyseur mit bipolarer Verschaltung der Elektrolysezellen vorliegen.

3. Verfahren nach Anspruch 1 oder 2, **dadurch gekennzeichnet, dass** die eventuellen Störanteile im Wechselspannungssignal und/oder Wechselstromsignal vor oder nach der Erfassung des Signals herausgefiltert werden.

4. Verfahren nach einem der Ansprüche 1 bis 3, **dadurch gekennzeichnet, dass** die Wechselstrom-/Wechselspannungsanteile mit einer Abtastrate von mindestens 10 kHz, bevorzugt von mindestens 100 kHz gemessen werden.

5. Verfahren nach einem der Ansprüche 1 bis 4, **dadurch gekennzeichnet, dass** die Messung des Wechselstromanteils an der Stromzuführung zur Elektrolysezelle induktiv erfolgt, insbesondere unter Verwendung einer Rogowski-Spule.

6. Verfahren nach einem der Ansprüche 1 bis 5, **dadurch gekennzeichnet, dass** als Kennwert für die Funktionstüchtigkeit der einzelnen Elektrolysezellen die Steigung in einer abgeleiteten Stromdichte-Spannungs-Kennlinie zur Identifizierung von elektrischen Kontaktierungsfehlern und/oder Membranschäden verwendet wird.

7. Verfahren nach einem der Ansprüche 1 bis 6, **dadurch gekennzeichnet, dass** als Kennwert für die Funktionstüchtigkeit der einzelnen Elektrolysezellen in einer abgeleiteten Stromdichte-Spannungs-Kennlinie der extrapolierte Achsenabschnitt der Kennlinie für die Stromdichte Null zur Identifizierung von Lecks in der Ionenaustauschermembran bei Membranelektrolyseuren oder zur Identifizierung von Elektrodenfehlern verwendet wird.

8. Verfahren nach einem der Ansprüche 1 bis 7, **dadurch gekennzeichnet, dass** als Kennwert für die Funktionstüchtigkeit der einzelnen Elektrolysezellen in einer abgeleiteten Stromdichte-Spannungs-Kennlinie die Veränderungen der Hysterese der Kennlinie verwendet werden.

9. Verfahren nach einem der Ansprüche 1 bis 8, **dadurch gekennzeichnet, dass** das Verfahren mit der Überwachung der Einzelzellspannung der Elektrolysezellen kombiniert wird.

10. Verfahren nach einem der Ansprüche 1 bis 9, **dadurch gekennzeichnet, dass** bei Überschreiten einer vorgegebenen Anzahl von in ihrer Funktionsfähigkeit beeinträchtigten Elektrolysezellen aufgrund der Messwerterfassung ein Warnsignal erzeugt wird, das zur Information des Bedienpersonals oder zur automatischen Außerbetriebnahme der einzelnen Elektrolysezellen oder des gesamten Elektrolyseurs verwendet wird.

11. Verfahren nach einem der Ansprüche 1 bis 10, **dadurch gekennzeichnet, dass** das Verfahren in einer Elektrolyseanlage zur Elektrolyse von Alkalichloridlösungen, insbesondere von Lithium-, Natrium-, oder Kaliumchloridlösungen, bevorzugt von Natriumchloridlösungen oder Salzsäure betrieben wird.

12. System zur Überwachung der Funktionsfähigkeit von Elektrolysezellen einer Elektrolyseanlage mit mehreren Elektrolysezellen, insbesondere einer Membranelektrolyseanlage, bevorzugt mit mehreren gleichzeitig in Produktion betriebenen Elektrolysezellen, mindestens umfassend einen Spannungserzeuger (1) zur Erzeugung einer der Elektrolysegleichspannung überlagerten Wechselspannung, eine Spannungsmesseinrichtung (5) geschaltet zur Messung des Gleichspannunganteils und des Wechselspannungsanteils über den einzelnen Elektrolysezellen (4), mindestens eine Strommesseinrichtung (6,7) zur Messung des Gleichstromanteils und des Wechselstromanteils des elektrischen Stroms, der den Elektrolysezellen zufließt und eine Datenverarbeitungseinheit (8), die einen Aufnehmer für die Messwerte der Gleichspannungsanteile, der Wechselspannungsanteile, des Gleichstroms und des Wechselstromanteils, einen Erzeuger für eine Strom/Spannungskurve und einen Vergleicher für den Vergleich der Strom/Spannungskurve der einzelnen Elektrolysezellen mit den vorgegebenen Kennwerten einer funktionstüchtigen Elektrolysezelle umfasst, wobei der Wechselspannungserzeuger durch einen Gleichrichter für die Erzeugung der Elektrolysespannung aus Wechselspannung gebildet ist, der im Betrieb eine Oberwellenwechselspannung aufweist.

13. System nach Anspruch 12, **dadurch gekennzeichnet, dass** es Strom- und Spannungsmesseinrichtungen für Elektrolysezellen in einem Elektrolyseur mit bipolarer Verschaltung der Elektrolysezellen aufweist.

14. System nach Anspruch 12 bis 13, **dadurch gekennzeichnet, dass** es elektronische Filter für eventuelle Störanteile im Wechselspannungssignal vor der Erfassungseinheit der Datenverarbeitungseinheit umfasst.

15. System nach einem der Ansprüche 12 bis 14, **dadurch gekennzeichnet, dass** die Einrichtung zur Messung des Wechselstromanteils eine induktive Wechselstrommesseinrichtung ist und insbesondere eine Rogowski-Spule als Messwertaufnehmer umfasst.

16. System nach einem der Ansprüche 12 bis 15, **dadurch gekennzeichnet, dass** die Datenverarbeitungseinheit eine Ausgabeeinheit mit Signalerzeuger aufweist.

17. System nach einem der Ansprüche 12 bis 16, **dadurch gekennzeichnet, dass** der Signalerzeuger mit einer optisch und /oder akustischen Warnvorrichtung und/oder mit der Anlagensteuerung für den Betrieb der einzelnen Elektrolysezellen, oder ausgewählter Zellenstapel oder des gesamten Elektrolyseurs elektrisch verbunden ist.

18. System nach einem der Ansprüche 12 bis 17, **dadurch gekennzeichnet, dass** die Elektrolyseanlage eine Anlage zur Elektrolyse von Alkalichloridlösungen, insbesondere von Lithium-, Natrium-, oder Kaliumchloridlösungen, bevorzugt von Natriumchloridlösungen oder Salzsäure ist.

## Claims

1. Method for monitoring the functionality of electrolysis cells of an electrolysis facility, in particular a membrane electrolysis facility, preferably of multiple electrolysis cells operated simultaneously in production, **characterized in that** the current/voltage curve of an AC voltage overlaid on the electrolysis voltage is measured and compared to the predefined characteristic values of a functional electrolysis cell and the comparison value is detected and **in that** the harmonic wave AC voltage of the rectifier is used as the AC voltage for the generation of the electrolysis voltage.

2. Method according to Claim 1, **characterized in that** the electrolysis cells are provided in an electrolyser having bipolar interconnection of the electrolysis cells.

3. Method according to Claim 1 or 2, **characterized in that** the possible interfering components in the AC voltage signal and/or alternating current signal are filtered out before or after the detection of the signal.

4. Method according to any one of Claims 1 to 3, **characterized in that** the alternating current/AC voltage components are measured at a sampling rate of at least 10 kHz, preferably at least 100 kHz.

5. Method according to any one of Claims 1 to 4, **characterized in that** the measurement of the alternating current component at the current supply to the electrolysis cell is performed inductively, in particular with use of a Rogowski coil.

6. Method according to any one of Claims 1 to 5, **characterized in that** the slope in a derived current density-voltage characteristic curve is used as a characteristic value for the functionality of the individual electrolysis cells to identify electrical contact faults and/or membrane damage.

7. Method according to any one of Claims 1 to 6, **characterized in that** the extrapolated axis section of the characteristic curve for the current density zero in a derived current density-voltage characteristic curve is used as a characteristic value for the functionality of the individual electrolysis cells to identify leaks in the ion exchange membrane in membrane electrolysers or to identify electrode flaws.

8. Method according to any one of Claims 1 to 7, **characterized in that** the changes of the hysteresis of the characteristic curve are used as a characteristic value for the functionality of the individual electrolysis cells in a derived current density-voltage characteristic curve.

9. Method according to any one of Claims 1 to 8, **characterized in that** the method is combined with the monitoring of the single cell voltage of the electrolysis cells.

10. Method according to any one of Claims 1 to 9, **characterized in that** if a predefined number of electrolysis cells which are impaired in their functionality is exceeded based on the measured value detection, a warning signal is generated, which is used for informing the operating personnel or for automatically taking the individual electrolysis cells or the entire electrolyser out of operation.

11. Method according to any one of Claims 1 to 10, **characterized in that** the method is operated in an electrolysis facility for electrolysis of alkali chloride solutions, in particular of lithium chloride, sodium chloride, or potassium chloride solutions, preferably of sodium chloride solutions or hydrochloric acid.

12. System for monitoring the functionality of electrolysis cells of an electrolysis facility having multiple electrolysis cells, in particular a membrane electrolysis facility, preferably having multiple electrolysis cells operated simultaneously in production, at least comprising a voltage generator (1) for generating an AC voltage overlaid on the electrolysis DC voltage, a voltage measuring unit (5) connected to measure the DC voltage component and the AC voltage component over the individual electrolysis cells (4), at least one current measuring unit (6, 7) for measuring the direct current component and the alternating current component of the electrical current, which flows to the electrolysis cells, and a data processing unit (8), which comprises a recorder for the measured values of the DC voltage components, the AC voltage components, the direct current, and the alternating current component, a generator for a current/voltage curve and a comparator for comparing the current/voltage curve of the individual electrolysis cells to the predefined characteristic values of a functional electrolysis cell, wherein the AC voltage generator is formed by a rectifier for generating the electrolysis voltage from AC voltage, which has a harmonic wave AC voltage in operation.

13. System according to Claim 12, **characterized in that** it has current and voltage measuring units for electrolysis cells in an electrolyser having bipolar interconnection of the electrolysis cells.

14. System according to Claim 12 or 13, **characterized in that** it comprises electronic filters for possible interfering components in the AC voltage signal upstream of the detection unit of the data processing unit.

15. System according to any one of Claims 12 to 14, **characterized in that** the unit for measuring the alternating current component is an inductive alternating current measuring unit and in particular comprises a Rogowski coil as a measured value sensor.

16. System according to any one of Claims 12 to 15, **characterized in that** the data processing unit has an output unit having signal generator.

17. System according to any one of Claims 12 to 16, **characterized in that** the signal generator is electrically connected to an optical and/or acoustic warning device and/or to the facility controller for the operation of the individual electrolysis cells, or selected cell stacks, or the entire electrolyser.

18. System according to any one of Claims 12 to 17, **characterized in that** the electrolysis facility is a facility for the electrolysis of alkali chloride solutions, in particular lithium chloride, sodium chloride, or potassium chloride solutions, preferably of sodium chloride solutions or hydrochloric acid.

## Revendications

1. Procédé de surveillance du bon fonctionnement de cellules d'électrolyse d'une installation d'électrolyse, en particulier d'une installation d'électrolyse à membranes, de préférence de plusieurs cellules d'électrolyse utilisées simultanément en production, **caractérisé en ce que** la courbe de courant/tension d'une tension alternative superposée à la tension d'électrolyse est mesurée et est comparée aux valeurs caractéristiques prédéterminées d'une cellule d'électrolyse fonctionnant correctement, et la valeur de comparaison est saisie et **en ce que** la tension alternative utilisée est la tension alternative d'ondulation harmonique du redresseur pour la génération de la tension d'électrolyse.

2. Procédé selon la revendication 1, **caractérisé en ce que** les cellules d'électrolyse sont situées dans un électrolyseur qui présente une commutation bipolaire des cellules d'électrolyse.

3. Procédé selon la revendication 1 ou 2, **caractérisé en ce que** les éventuels composants parasites du signal de tension alternative et/ou du signal de courant alternatif sont éliminés par filtrage avant ou après la détection du signal.

4. Procédé selon l'une des revendications 1 à 3, **caractérisé en ce que** les fractions de courant alternatif et/ou de tension alternative sont mesurées à un taux d'échantillonnage d'au moins 10 kHz et de préférence d'au moins 100 kHz.

5. Procédé selon l'une des revendications 1 à 4, **caractérisé en ce que** la mesure de la fraction de courant alternatif s'effectue par induction sur l'amenée de courant à la cellule d'électrolyse, en particulier en utilisant une bobine de Rogowski.

6. Procédé selon l'une des revendications 1 à 5, **caractérisé en ce que** comme valeur caractéristique du bon fonctionnement des différentes cellules d'électrolyse, on utilise la pente d'une ligne caractéristique de densité de courant-tension dérivée pour identifier des défauts de contact électrique et/ou des dommages aux membranes.

7. Procédé selon l'une des revendications 1 à 6, **caractérisé en ce que** comme valeur caractéristique du bon fonctionnement des différentes cellules d'électrolyse, on utilise dans une ligne caractéristique de densité de courant - tension dérivée la partie axiale extrapolée de la ligne caractéristique pour la densité de courant zéro pour identifier des fuites dans la membrane échangeuse d'ions sur des électrolyseurs à membranes ou pour identifier des défauts sur les électrodes.

8. Procédé selon l'une des revendications 1 à 7, **caractérisé en ce que** comme valeur caractéristique du bon fonctionnement des différentes cellules d'électrolyse, on utilise dans une ligne caractéristique de densité de courant - tension dérivée les modifications de l'hystérèse de la ligne caractéristique.

9. Procédé selon l'une des revendications 1 à 8, **caractérisé en ce que** le procédé est combiné avec la surveillance de la tension des différentes cellules d'électrolyse.

10. Procédé selon l'une des revendications 1 à 9, **caractérisé en ce que** lorsqu'un nombre prédéterminé de cellules d'électrolyse dont le bon fonctionnement est compromis est dépassé, un signal d'alarme est généré en raison de la détection des valeurs de mesure, lequel est utilisé pour informer le personnel de service ou pour mettre automatiquement hors service les différentes cellules d'électrolyse ou l'ensemble de l'électrolyseur.

11. Procédé selon l'une des revendications 1 à 10, **caractérisé en ce que** le procédé est utilisé dans une installation d'électrolyse pour l'électrolyse de solutions de chlorure de métal alcalin, en particulier de solutions de chlorure de lithium, de sodium ou de potassium, de préférence de solutions de chlorure de sodium ou d'acide chlorhydrique.

12. Système de surveillance du bon fonctionnement de cellules d'électrolyse d'une installation d'électrolyse présentant plusieurs cellules d'électrolyse, en particulier d'une installation d'électrolyse à membranes, de préférence avec plusieurs cellules d'électrolyse utilisées simultanément en production, et comprenant au moins un générateur de tension (1) qui forme une tension alternative superposée à la tension continue d'électrolyse, un dispositif (5) de mesure de tension raccordé pour mesurer la fraction de tension continue et la fraction de tension alternative sur les différentes cellules d'électrolyse (4), au moins un dispositif (6, 7) de mesure de courant pour la mesure de la fraction de courant continu et de la fraction de courant alternatif du courant électrique qui est délivré aux cellules d'électrolyse et une unité (8) de traitement de données qui comporte un enregistreur des valeurs de mesure des fractions de tension continue, des fractions de tension alternative, du courant continu et de la fraction de courant alternatif, un générateur de courbe de courant/tension et un comparateur pour comparer la courbe de courant/tension des différentes cellules d'électrolyse à des valeurs caractéristiques prédéterminées d'une cellule d'électrolyse fonctionnant correctement,
le générateur de tension alternative étant formé par un redresseur pour la génération de la tension d'électrolyse à partir d'une tension alternative, qui présente en fonctionnement une tension alternative d'ondulation harmonique.

13. Système selon la revendication 12, **caractérisé en ce qu'**il présente des dispositifs de mesure de courant et de tension pour des cellules d'électrolyse dans un électrolyseur présentant un raccordement bipolaire des cellules d'électrolyse.

14. Système selon les revendications 12 et 13, **caractérisé en ce qu'**il comporte des filtres électroniques pour les éventuels composants parasites du signal de tension alternative avant l'unité de détection de l'unité de traitement de données.

15. Système selon l'une des revendications 12 à 14, **caractérisé en ce que** le dispositif de mesure de la fraction de courant alternatif est un dispositif de mesure du courant alternatif inductif et en particulier comporte comme enregistreur de valeurs de mesure une bobine de Rogowski.

16. Système selon l'une des revendications 12 à 15, **caractérisé en ce que** l'unité de traitement de données présente une unité de sortie dotée d'un générateur de signaux.

17. Système selon l'une des revendications 12 à 16, **caractérisé en ce que** le générateur de signaux est raccordé électriquement à un ensemble d'avertissement visuel et/ou acoustique et/ou à une commande de l'installation pour le fonctionnement des différentes cellules d'électrolyse ou de piles sélectionnées de cellules ou de l'ensemble de l'électrolyseur.

18. Système selon l'une des revendications 12 à 17, **caractérisé en ce que** l'installation d'électrolyse est une installation d'électrolyse de solutions de chlorure de métal alcalin, en particulier de solutions de chlorure de lithium, de sodium ou de potassium et de préférence de solutions de chlorure de sodium ou d'acide chlorhydrique.

Fig. 1:

Fig. 2:

Fig. 3

Fig. 4:

Fig. 5:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005052700 A1
- WO 2007087728 A1
- WO 2001078164 A3
- DE 2652774 C2
- EP 00002006418 B1
- WO 2001078164 A2
- WO 2006133562 A1
- DE 10217694 A1
- WO 2007087729 A1
- US 20050287402 A1
- US 20100216043 A1
- US 20040220752 A1